# EUROPEAN PATENT APPLICATION

(11) **EP 0 724 002 A2**
(43) Date of publication of application: **31.07.1996**
(21) Application number: 96100973.5
(22) Date of filing: 24.01.1996
(51) Int. Cl.: C09J 7/02

(54) **Adhesive film**

(30) Priority: 25.01.1995 GB 9501450
(71) Applicant: MOBIL PLASTICS EUROPE, INC., 1445 Luxembourg (LU)
(72) Inventor: Ambroise, Benoit, F-55150 Brandeville (FR); Petitjean, Maurice, B-6820 Florenville (BE)
(74) Representative: Colmer, Stephen Gary

(57) **Abstract**

A thermoplastic polymeric film structure comprises a support which is coated with a pressure sensitive adhesive on a first surface thereof. A second surface of the support, opposite to the first surface, comprises medium density polyethylene (MDPE) or low density polyethylene (LDPE).

## Description

This invention relates to an adhesive film; more particularly, this invention relates to a pressure sensitive adhesive film, preferably in tape form.

A film of this type has been disclosed in PCT Application No. EP94/02381. In this application there is described a thermoplastic polymeric film structure comprising a support which is coated with a pressure sensitive adhesive on a first surface thereof, wherein a second surface of the support, opposite to the first surface, comprises high density polyethylene (HDPE).

It has was found that the presence of HDPE in the surface of the support opposite from the adhesive gives the surface excellent release properties, so that after the film has been wound on a roll it can readily be unwound again without any significant tranfer of adhesive onto the second surface of the support. In addition, it has been found that during unwinding there is less noise than with the pressure sensitive tapes of the prior art.

It has now been found that the use of medium density polyethylene (MDPE) and/or low density polyethylene (LDPE) also produces unexpectedly good results.

Therefore, according to one aspect of the invention there is provided a thermoplastic polymeric film structure comprising a support which is coated with a pressure sensitive adhesive on a first surface thereof, wherein a second surface of the support, opposite to the first surface, comprises MDPE and or LDPE, and wherein the second surface does not include any HDPE.

Thus, the first aspect of the invention is predicated upon the discovery that MDPE and LDPE have anti-adhesive properties.

The support may comprise a single layer or a plurality of layers.

The MDPE preferably has a density from 0.920 to 0.945, more preferably from 0.925 to 0.940, and most preferably 0.935. The LDPE preferably has a density from 0.900 to 0.940, preferably from 0.910 to 0.925, and most preferably 0.920.

In a first preferred embodiment the support comprises a single layer of MDPE or LDPE.

Advantageously the second surface of the support has not been subjected to any form of surface-treatment. However, it is preferred that the first surface of the support has been subjected to surface-treatment.

In the first embodiment the support preferably contains from 50 to 100 wt% MDPE or LDPE, more preferably from 80 to 100 wt% MDPE or LDPE. When the support contains less than 100 wt% MDPE or LDPE it is preferred that it comprises a blend of MDPE or LDPE with at least one other olefin polymer (but not including HDPE). The other olefin polymer may be, for example, a polyethylene of lower density such as linear low density polyethylene (LLDPE), or a copolymer or terpolymer of propylene.

The copolymer or terpolymer of propylene is suitably a random or block copolymer of ethylene and propylene or of butylene and propylene; or a random or block terpolymer of ethylene, propylene and butene-1.

The preferred copolymers of ethylene and propylene contain from 1 to 30 wt%, preferably from 2 to 7 wt%, more preferably 3 to 5 wt%, ethylene. Also, the preferred copolymers have a melt flow rate at 230°C from 2 to 15, more preferably 3 to 8; a crystalline melting point from 125 to 150°C; a number average molecular weight from 25000 to 100000; and a density from 0.89 to 0.90.

The preferred copolymers of butylene and propylene contain up to 30 wt% butylene.

The preferred terpolymers of propylene contain from 1 to 10, preferably from 2 to 6, wt% ethylene, from 80 to 97, preferably from 88 to 95, wt% propylene, and from 1 to 20, preferably from 2 to 15, wt% butene-1.

Preferably, the support contains an anti-blocking agent, or other additives. Such additives are not essential - MDPE and LDPE has very good release properties without them - but certain additives can produce further improvements to the release properties, and to other desirable properties. Particularly good results have been obtained with silicone oil, EBS (ethylene bis stearamide), GMS (glycero mono stearate) and montan wax. A preferred silicone oil is a polydialkyl-siloxane.

When silicone oil is used there is some transfer of the silicone oil to the surface of the adhesive after the film has been wound onto a roll. However, despite this transfer, good adhesion by the pressure sensitive adhesive coated surface was manifest.

In a second preferred embodiment the support has three layers in a structure comprising a core layer, sandwiched between two other layers. A first of said other layers is provided with the adhesive coating on the external surface thereof. A second of said other layers comprises MDPE or LDPE; the external surface of the second layer faces away from the adhesive coating.

Advantageously the external surface of the second layer has not been subjected to any form of surface treatment. However, it is preferred that the external surface of the first layer has been subjected to surface-treatment prior to the application of the adhesive.

In the second embodiment the second layer preferably contains from 50 to 100 wt% MDPE or LDPE, more preferably from 80 to 100 wt% LDPE or MDPE. When the second layer contains less than 100 wt% LDPE or MDPE it is preferred that it comprises a blend of MDPE or LDPE with at least one other olefin polymer. The other olefin polymer may be, for example, a polyethylene of lower density such as linear low density polyethylene (LLDPE), or a copolymer or terpolymer of propylene.

The copolymer or terpolymer of propylene is suitably a random or block copolymer of ethylene and propylene or of butylene and propylene; or a random or block terpolymer of ethylene, propylene and butene-1.

The preferred copolymers of ethylene and propylene contain from 1 to 30 wt%, preferably from 2 to 7 wt%, more preferably 3 to 5 wt%, ethylene. Also, the preferred copolymers have a melt flow rate at 230°C from 2 to 15, more preferably 3 to 8; a crystalline melting point from 125 to 150°C; a number average molecular weight from 25000 to 100000; and a density from 0.89 to 0.90.

The preferred copolymers of butylene and propylene contain up to 30 wt% butylene.

The preferred terpolymers of propylene contain from 1 to 10, preferably from 2 to 6, wt% ethylene, from 80 to 97, preferably from 88 to 95, wt% propylene, and from 1 to 20, preferably from 2 to 15, wt% butene-1.

Preferably, the second layer contains an anti-blocking agent, or other additives. As noted above, such additives are not essential. Particularly good results have been obtained with silicone oil, EBS, GMS and montan wax. A preferred silicone oil is a polydialkylsiloxane.

When silicone oil is used there is some transfer of the silicone oil to the surface of the adhesive after the film has been wound onto a roll. However, despite this transfer, good adhesion by the pressure sensitive adhesive coated surface was manifest.

Preferably the core layer comprises an oriented olefin polymer. The core layer desirably comprises a polymer of propylene, suitably homopolymeric polypropylene and preferably isotactic polypropylene.

The core layer may be provided with voids: more specifically, the core layer may be cavitated, for example, as disclosed in EP-A-0083495. A preferred cavitating agent is polybutylene terephthalate, especially as spherical particles.

The first layer may comprise any olefin polymer useful in the manufacture of an adhesive liner, or a mixture thereof, and is suitably a polymer of propylene, such as polypropylene. The first layer may comprise any of the materials described above with reference to the second layer. If desired, the first layer may be the same material as the second layer.

In a particularly advantageous construction the first layer comprises MDPE or LDPE, the external surface of which has been treated to alter its surface properties.

The surface-treatments discussed above may be achieved, for example, by subjecting the surface to corona discharge, to a flame or to oxidising chemicals; a flame treatment is preferred. Preferably, the surface is treated to a surface activity of at least 36 dynes/cm (36 mN/m), more preferably to at least 40 dynes/cm (40 mN/m).

In the second embodiment the core layer is preferably coextruded or extrusion coated with the first and second layers, and then the whole support is desirably biaxially oriented. The polymers can be brought to the molten state and coextruded from a conventional extruder through a flat sheet die, the melt streams being combined in an adapter prior to being extruded from the die. After leaving the die orifice, the thermoplastic polymeric film structure is chilled and the quenched sheet is then preferably reheated and oriented by stretching (for example, from 4 to 6 times in the machine direction at about 253°F (123°C) and, subsequently, from 8 to 10 times in the transverse direction, at about 310°F (154°C)).

According to a second aspect of the present invention there is provided a thermoplastic polymeric film structure which comprises:
(a) a support which is coated with a pressure sensitive adhesive on a first surface thereof, said surface comprising MDPE, LDPE and/or LLDPE and having been surface-treated prior to the application of said adhesive; and
(b) an anti-adhesive material incorporated in or coated on a second surface of the support opposite to the adhesive coating.

This aspect of the invention is predicated on the unexpected discovery that adhesive provided on surface-treated MDPE, LDPE or LLDPE has remarkably good adhesive properties. These adhesive properties are most remarkable when the adhesive is a hot melt adhesive. However, good results can be obtained with other adhesives, including solvent based adhesives and water based adhesives.

The support may comprise a single layer or a plurality of layers.

The MDPE preferably has a density from 0.920 to 0.945, more preferably from 0.925 to 0.940, and most preferably 0.935. The LDPE preferably has a density from 0.900 to 0.940, preferably from 0.910 to 0.925, and most preferably 0.920. The LLDPE preferably has a density from 0.890 to 0.935, preferably from 0.900 to 0.925, and most preferably 0.910.

The anti-adhesive material may be any anti-adhesive material known from the prior art, which is coated upon the second surface of the support. Alternatively the anti-adhesive material may be incorporated into the second surface of the support.

It is preferred that the anti-adhesive material comprises MDPE or LDPE, incorporated into the second surface of the support.

In a first preferred embodiment of the second aspect of the invention the support comprises a single layer of MDPE or LDPE.

Advantageously the second surface of the support has not been subjected to any form of surface-treatment.

In the first embodiment the support preferably contains from 50 to 100 wt% MDPE, or LDPE more preferably from 80 to 100 wt% MDPE or LDPE. When the support contains less than 100 wt% MDPE or LDPE it is preferred that it comprises a blend of MDPE or LDPE with at least one other olefin polymer. The other olefin polymer may be, for example, a HDPE or LLDPE, or a copolymer or terpolymer of propylene.

The copolymer or terpolymer of propylene is suitably a random or block copolymer of ethylene and propylene or of butylene and propylene; or a random or block terpolymer of ethylene, propylene and butene-1.

The preferred copolymers of ethylene and propylene contain from 1 to 30 wt%, preferably from 2 to 7 wt%, more preferably 3 to 5 wt%, ethylene. Also, the preferred copolymers have a melt flow rate at 230°C from 2 to 15, more preferably 3 to 8; a crystalline melting point from 125 to 150°C; a number average molecular weight from 25000 to 100000; and a density from 0.89 to 0.90.

The preferred copolymers of butylene and propylene contain up to 30 wt% butylene.

The preferred terpolymers of propylene contain from 1 to 10, preferably from 2 to 6, wt% ethylene, from 80 to 97, preferably from 88 to 95, wt% propylene, and from 1 to 20, preferably from 2 to 15, wt% butene-1.

Preferably, the support contains an anti-blocking agent, or other additives. Such additives are not essential - MDPE and LDPE have very good release properties without them - but certain additives can produce further improvements to the release properties, and to other desirable properties. Particularly good results have been obtained with silicone oil, EBS, GMS and montan wax. A preferred silicone oil is a polydialkyl-siloxane.

When silicone oil is used there is some transfer of the silicone oil to the surface of the adhesive after the film has been wound onto a roll. However, despite this transfer good adhesion by the pressure sensitive adhesive coated surface was manifest.

In a second preferred embodiment of the second aspect of the invention the support has three layers in a structure comprising a core layer, sandwiched between two other layers. A first of said other layers is provided with the adhesive coating on the external surface thereof. A second of said other layers comprises HDPE, MDPE or LDPE; the external surface of the second layer faces away from the adhesive coating.

Advantageously the external surface of the second layer has not been subjected to any form of surface-treatment.

In the second embodiment the second layer preferably contains from 50 to 100 wt% HDPE, MDPE or LDPE, more preferably from 80 to 100 wt% HDPE, MDPE or LDPE. When the second layer contains less than 100 wt% HDPE, MDPE or LDPE it is preferred that it comprises a blend of HDPE, MDPE or LDPE with at least one other olefin polymer. The other olefin polymer may be, for example, a polyethylene of lower density such as linear low density polyethylene (LLDPE) or a copolymer or terpolymer of propylene.

The copolymer or terpolymer of propylene is suitably a random or block copolymer of ethylene and propylene or of butylene and propylene; or a random or block terpolymer of ethylene, propylene and butene-1.

The preferred copolymers of ethylene and propylene contain from 1 to 30 wt%, preferably from 2 to 7 wt%, more preferably 3 to 5 wt%, ethylene. Also, the preferred copolymers have a melt flow rate at 230°C from 2 to 15, more preferably 3 to 8; a crystalline melting point from 125 to 150°C; a number average molecular weight from 25000 to 100000; and a density from 0.89 to 0.90.

The preferred copolymers of butylene and propylene contain up to 30 wt% butylene.

The preferred terpolymers of propylene contain from 1 to 10, preferably from 2 to 6, wt% ethylene, from 80 to 97, preferably from 88 to 95, wt% propylene, and from 1 to 20, preferably from 2 to 15, wt% butene-1.

Preferably, the second layer contains an anti-blocking agent, or other additives. As noted above, such additives are not essential. Particularly good results have been obtained with silicone oil, EBS, GMS and montan wax. A preferred silicone oil is a polydialkylsiloxane.

When silicone oil is used there is some transfer of the silicone oil to the surface of the adhesive after the film has been wound onto a roll. However, despite this transfer good adhesion by the pressure sensitive adhesive coated surface was manifest.

Preferably the core layer comprises an oriented olefin polymer. The core layer desirably comprises a polymer of propylene, suitably homopolymeric polypropylene and preferably isotactic polypropylene.

The core layer may be provided with voids: more specifically, the core layer may be cavitated, for example, as disclosed in EP-A-0083495. A preferred cavitating agent is polybutylene terephthalate, especially as spherical particles.

The first layer comprises MDPE, LDPE or LLDPE which has been treated to alter its surface properties. The first layer may comprise any of the materials described above with reference to the second layer. If desired, the first layer may be the same material as the second layer.

The surface-treatments discussed above, with reference to the second aspect of the invention, may be achieved, for example, by subjecting the surface to corona discharge, to a flame or to oxidising chemicals; a flame treatment is preferred. Preferably, the surface is treated to a surface activity of at least 36 dynes/cm (36 mN/m), more preferably to at least 40 dynes/cm (40 mN/m).

In the second embodiment the core layer is preferably coextruded or extrusion coated with the first and second layers, and then the whole support is desirably biaxially oriented. The polymers can be brought to the molten state and coextruded from a conventional extruder through a flat sheet die, the melt streams being combined in an adapter prior to being extruded from the die. After leaving the die orifice, the thermoplastic polymeric film structure is chilled and the quenched sheet is then preferably reheated and oriented by stretching; for example, from 4 to 6 times in the machine direction at about 253°F (123°C) and, subsequently, from 8 to 10 times in the transverse direction, at about 310°F (154°C).

The pressure sensitive adhesive referred to above may be a hot melt adhesive, a solvent based adhesive or a water based adhesive. The invention may be used with any pressure sensitive adhesive used in the adhesive tapes of the prior art. Particular adhesives that may be used include rubber and acrylic based adhesives, which are described in detail in the prior art.

The unexpected release properties of HDPE, MDPE and LDPE may also be used in a release assembly comprising a support which is coated with a pressure sensitive adhesive on a first surface thereof, and a release layer, the arrangement being such that the pressure sensitive adhesive is sandwiched between the support and the release layer, wherein a surface of the release layer in contact with the pressure sensitive adhesive comprises HDPE, MDPE and/or LDPE.

The support may, for example, be a label. A plurality of labels may be provided on the release layer. This structure enables the or each label to be readily peeled from the release layer.

The HDPE preferably has a density from 0.940 to 0.965, more preferably 0.950 to 0.960, and most preferably 0.965. The MDPE preferably has a density from 0.920 to 0.945, more preferably from 0.925 to 0.940, and most preferably 0.935. The LDPE preferably has a density from 0.900 to 0.940, preferably from 0.910 to 0.925, and most preferably 0.920.

Advantageously the surface of the release layer in contact with the pressure sensitive adhesive has not been subjected to any form of surface-treatment. However, it is preferred that the surface of the support in contact with the pressure sensitive adhesive has been subjected to surface-treatment.

The release layer preferably contains from 50 to 100 wt% HDPE, MDPE or LDPE, more preferably from 80 to 100 wt% HDPE, MDPE or LDPE. When the support contains less than 100 wt% HDPE, MDPE or LDPE it is preferred that it comprises a blend of HDPE, MDPE or LDPE with at least one other olefin polymer. The other olefin polymer may be, for example, a polyethylene of lower density such as linear low density polyethylene (LLDPE), or a copolymer or terpolymer of propylene.

The copolymer or terpolymer of propylene is suitably a random or block copolymer of ethylene and propylene or of butylene and propylene; or a random or block terpolymer of ethylene, propylene and butene-1.

The preferred copolymers of ethylene and propylene contain from 1 to 30 wt%, preferably from 2 to 7 wt%, more preferably 3 to 5 wt%, ethylene. Also, the preferred copolymers have a melt flow rate at 230°C from 2 to 15, more preferably 3 to 8; a crystalline melting point from 125 to 150°C; a number average molecular weight from 25000 to 100000; and a density from 0.89 to 0.90.

The preferred copolymers of butylene and propylene contain up to 30 wt% butylene.

The preferred terpolymers of propylene contain from 1 to 10, preferably from 2 to 6, wt% ethylene, from 80 to 97, preferably from 88 to 95, wt% propylene, and from 1 to 20, preferably from 2 to 15, wt% butene-1.

Preferably, the support contains an anti-blocking agent, or other additives. Such additives are not essential - MDPE and LDPE has very good release properties without them - but certain additives can produce further improvements to the release properties, and to other desirable properties. Particularly good results have been obtained with silicone oil, EBS (ethylene bis stearamide), GMS (glycero mono stearate) and montan wax. A preferred silicone oil is a polydialkyl-siloxane.

When silicone oil is used there is some transfer of the silicone oil to the surface of the adhesive after the film has been wound onto a roll. However, despite this transfer, good adhesion by the pressure sensitive adhesive coated surface was manifest.

Preferably the surface of the support comprises HDPE, MDPE or LDPE. Preferably the entire support comprises a layer of HDPE, MDPE or LDPE.

The following Examples illustrate the invention.

### Example 1

Polypropylene homopolymer was fed into the feed hopper of a rotating screw extruder having a 2.5 inch (6.4 cm) diameter and an L:D ratio of 24:1. MDPE (density 0.935) was also fed into a satellite extruder having a 1.5 inch (3.8 cm) diameter and an L:D ratio of 20:1. The molten polyethylene was fed into the slot die fixed to the first extruder through an adaptor designed to ensure that the molten polyethylene stream covered both sides of the molten polypropylene stream. The multi-layer structure was then quenched onto a chill roll to form a cast film which was immediately quenched in a cold water bath and sequentially biaxially oriented on conventional equipment. During the orientation the quenched film was first reheated to about 253°F (123°C) and stretched 5 times the machine direction between differential speed rollers, and was then fed to a transverse orientor where it was heated to about 310°F (154°C) and stretched 8 times.

The film ("Film A"), comprising 0.6 µm MDPE skin, on both sides, was next cooled; and trimmed. Thereafter it was flame treated to > 48 dynes/cm on one side; and wound on a roll. Finally the film was tested, using the procedure described below, to demonstrate release effect.

### Example 2

Polypropylene homopolymer was fed into the feed hopper of a rotating screw extruder having a 2.5 inch (6.4 cm) diameter and an L:D ratio of 24:1. LDPE (density 0.923 was also fed into a satellite extruder having a 1.5 inch (3.8 cm) diameter and an L:D ratio of 20:1. The molten polyethylene was fed into the slot die fixed to the first extruder through an adaptor designed to ensure that the molten polyethylene stream covered both sides of the molten polypropylene stream. The multi-layer structure was then quenched onto a chill roll to form a cast film which was immediately quenched in a cold water bath and sequentially biaxially oriented on conventional equipment. During the orientation the quenched film was first reheated to about 253°F (123°C) and stretched 5 times the machine direction between differential speed rollers, and was then fed to a transverse orientor where it was heated to about 310°F (154°C) and stretched 8 times.

The film ("Film B"), comprising 0.6 µm LDPE skin, on both sides, was next cooled; and trimmed. Thereafter it was flame treated to > 48 dynes/cm on one side; and wound on a roll. Finally the film was tested, using the procedure described below, to demonstrate release effect.

### PROCEDURE :

A standard adhesive tape, containing a pressure sensitive adhesive was applied only to the untreated side of the prepared film (the release property of the treated side was not tested). This provides an adhesive coating on the prepared film, and gives the film a structure in accordance with the invention.

The peel force necessary to separate both the standard tape and the test film was measured at 300 mm/min with the film test and adhesive at 90°, 135° and 180° angles.

The transfer of adhesive was observed when peeling the samples at the same angles.

The measurements were performed 3 times, and the mean was taken. The results are shown in Table 1, for the untreated side of the film.

This test simulates what happens during unwinding a reel of tape composed of a support layer and a pressure sensitive adhesive applied to a treated surface of the support layer.

The following films were also tested :
- Film C -: Oriented polypropylene, Mobil Ref: 28MB250
- Film D -: Clear PVC, 40 microns
- Film E -: Yellow PVC, 35 microns

**TABLE 1**

| | Release Force(g/25mm) | | | Adh. Transfer | | |
|---|---|---|---|---|---|---|
| | 90° | 135° | 180° | 90° | 135° | 180° |
| Film A | 220 | 360 | 400 | 0% | 0% | 100% |
| Film B | 135 | 300 | 400 | 0% | 0% | 100% |
| Film C | 600 | 800 | 900 | 40% | 100% | 100% |
| Film D | 230 | unmeasurable | | 0% | 0% | 0% |
| Film E | 135 | unmeasurable | | 0% | 0% | 0% |

## Claims

1. A thermoplastic polymeric film structure comprising a support which is coated with a pressure sensitive adhesive on a first surface thereof, wherein a second surface of the support, opposite to the first surface, comprises medium density polyethylene (MDPE) and/or low density polyethylene (LDPE), and wherein the second surface does not include any high density polyethylene (HDPE).

2. A film structure according to claim 1, wherein said first surface has been treated to alter its surface properties.

3. A film structure according to claim 2, wherein said surface-treatment comprises flame treatment.

4. A film structure according to any preceding claim, wherein the support is cavitated.

5. A film structure according to any preceding claim, wherein the support comprises a single layer.

6. A film structure according to claim 5, wherein the support comprises MDPE and/or LDPE.

7. A film structure according to claim 5 or 6, wherein said support has incorporated therein at least one additive comprising silicone oil, EBS, GMS and/or montan wax.

8. A film structure according to claim 7, wherein the silicone oil comprises a polydialkylsiloxane.

9. A film structure according to claim 1, 2, 3 or 4, wherein the support comprises three layers in a structure comprising a core layer, sandwiched between two other layers.

10. A film structure according to claim 9, wherein a first of said other layers is provided with the adhesive coating on the external surface thereof, and a second of said other layers comprises MDPE or LDPE, the external surface of the second layer facing away from the adhesive coating.

11. A film structure according to claim 10, wherein the first layer comprises polypropylene, HDPE, MDPE, LDPE or LLDPE.

12. A film structure according to claim 10 or 11, wherein said second layer has incorporated therein at least one additive comprising silicone oil, EBS, GMS and/or montan wax.

13. A film structure according to claim 12, wherein the silicone oil comprises a polydialkylsiloxane.

14. A film structure according to any one of claims 9 to 13, where the core layer layer comprises isotactic polypropylene.

15. A film structure according to any one of claims 9 to 14, wherein at least two of the layers are formed by coextrusion.

16. A film structure according to any preceding claim, which is biaxially oriented.

17. A film structure according to any preceding claim, wherein the second surface is not subjected to any surface-treatment.

18. Use of a film structure according to any preceding claim as a pressure sensitive adhesive tape.

19. A thermoplastic polymeric film structure which comprises:
(a) a support which is coated with a pressure sensitive adhesive on a first surface thereof, said surface comprising MDPE, LDPE, and/or LLDPE and having been surface-treated prior to the application of said adhesive; and
(b) an anti-adhesive material incorporated in or coated on a second surface of the support opposite to the adhesive coating.

20. A film structure according to claim 19, wherein the second surface is not subjected to any surface-treatment.

21. A film structure according to claim 19 or 20, wherein the first surface is subjected to flame treatment.

22. A film structure according to claim 19, 20 or 21, wherein the pressure sensitive adhesive is a hot melt adhesive.

23. A film structure according to any one of claims 19 to 22, wherein the anti-adhesive material comprises HDPE, MDPE or LDPE in the second surface of the support.

24. A film structure according to any one of claims 19 to 23, wherein the support comprises a single layer.

25. A film structure according to claim 24, wherein the support comprises HDPE, MDPE or LDPE, which acts as the anti-adhesive material.

26. A film structure according to claim 24 or 25, wherein said support has incorporated therein at least one additive comprising silicone oil, EBS, GMS and/or montan wax.

27. A film structure according to claim 26, wherein the silicone oil comprises a polydialkylsiloxane.

28. A film structure according to any one of claims 19 to 23, wherein the support comprises three layers in a structure comprising a core layer, sandwiched between two other layers.

29. A film structure according to claim 28, wherein a first of said other layers is provided with the adhesive coating on the external surface thereof, and a second of said other layers comprises HDPE, MDPE, or LDPE, which acts as the anti-adhesive material, the external surface of the second layer facing away from the adhesive coating.

30. A film structure according to claim 29, wherein the first layer comprises polypropylene, HDPE, MDPE, LDPE or LLDPE.

31. A film structure according to claim 29 or 30, wherein said second layer has incorporated therein at least one additive comprising silicone oil, EBS, GMS and/or montan wax.

32. A film structure according to claim 31, wherein the silicone oil comprises a polydialkylsiloxane.

33. A film structure according to any one of claims 28 to 32, wherein the core layer layer comprises isotactic polypropylene.

34. A film structure according to any one of claims 28 to 33, wherein at least two of the layers are formed by coextrusion.

35. A film structure according to any one of claims 19 to 34, which is biaxially oriented.

36. Use of a film structure according to any one of claims 19 to 35 as a pressure sensitive adhesive tape.

37. A release assembly comprising a support which is coated with a pressure sensitive adhesive on a first surface thereof, and a release layer, the arrangement being such that the pressure sensitive adhesive is sandwiched between the support and the release layer, wherein a surface of the release layer in contact with the pressure sensitive adhesive comprises HDPE, MDPE and/or LDPE.
